# EUROPEAN PATENT SPECIFICATION

(11) **EP 2 122 738 B1**
(45) Date of publication and mention of the grant of the patent: **17.08.2016**
(21) Application number: 08712719.7
(22) Date of filing: 18.02.2008
(51) Int. Cl.: H01M 10/04, H01M 10/28, H01M 10/30, H01M 2/08, H01M 10/34

(54) **A GASKET, A BIPOLAR BATTERY AND A METHOD FOR MANUFACTURING A GASKET**
DICHTUNG, BIPOLARBATTERIE UND VERFAHREN ZUM HERSTELLEN EINER DICHTUNG
UN JOINT STATIQUE, UNE BATTERIE BIPOLAIRE ET UN PROCÉDÉ DE FABRICATION D'UN JOINT STATIQUE

(30) Priority: 16.02.2007 SE 0700434
(43) Date of publication of application: 25.11.2009
(73) Proprietor: Nilar International AB, 183 12 Täby (SE)
(72) Inventor: HOCK, David, Castel Rock, CO 80004 (US); FREDRIKSSON, Lars, S-183 51 Täby (SE); PUESTER, Neil, H., Aurora, CA 80015-1711 (US)
(74) Representative: Brann AB
(86) International application number: PCT/SE2008/000127
(87) International publication number: WO 2008/100207

(56) References cited:
- WO-A1-03/026042
- WO-A1-2004/079851
- WO-A1-2005/048390
- JP-A- 2000 260 460
- US-A- 5 618 641
- US-A1- 2002 028 370

## Description

### Technical field

The present invention relates to a gasket, and a bipolar battery including at least one gasket. The present invention also relates to a method for manufacturing a gasket.

### Background to the invention

A bipolar battery construction comprises an electrically conductive bipolar layer, so called biplate that serves as electrical interconnection between adjacent cells in the battery as well as a partition between the cells. In order for the bipolar construction to be successfully utilized, the biplate must be sufficiently electronically conductive to transmit current from cell to cell, chemically stable in the cell's environment, capable of making and maintaining good contact to the electrodes and capable of being electronically insulated from other biplates, and sealable around the boundaries of the cell so as to contain electrolyte in the cell.

These requirements are more difficult to achieve in secondary (rechargeable) batteries due to the charging potential that can generate gas inside the battery, and in alkaline batteries due to the creep nature of the electrolyte. Achieving the proper combination of these characteristics has proven very difficult.

A common type of battery design is the so called 'flooded' battery wherein the electrolyte within the battery completely fills the porous spaces within the battery, with wet liquid electrolyte present in excess of that which can be absorbed by the constituent electrodes and separators within the battery. More recent battery designs are designated as 'starved electrolyte' or 'recombinant' batteries. In this sort of battery design, the porous spaces within the constituent electrodes and separators are not completely filled with electrolyte. Instead, some of this porous space is occupied by gases. As a result, the volume inside the battery surrounding the electrolyte is substantially dry due to the remaining potential for the capillary action of the porous spaces to absorb wet liquid electrolyte. This results in a battery configuration that is essentially damp, but not flooded or wet inside the battery. Such batteries have a volume into which gases generated within the battery can be contained. Starved electrolyte battery designs are typically much less tolerant of loss of electrolyte when compared to flooded batteries, as they have no extra wet reserve of electrolyte to compensate for electrolyte loss. Consequently, a starved electrolyte batteries' internal volume is sealed from the ambient environment during normal use. It is common in the art to refer to starved electrolyte batteries as made in a sealed configuration, as further described herein.

For maintenance-free operation it is desirable to operate rechargeable batteries in a sealed configuration. However, sealed bipolar designs typically utilize flat electrodes and stacked-cell constructions that present design challenges for proper containment of gases present and generated during cell operation. In a sealed construction, gases generated during charging need to be chemically recombined within the cell for stable operation. The pressure-containment requirement creates additional challenges in the design of a stable bipolar configuration.

New requirements in the field of transportation, communications, medical and power tools are generating specifications that existing batteries cannot meet. These include higher cycle life and the need for rapid and efficient recharges.

NiMH systems are seen as the alternative to meet cycle life, but costs for existing conventional fabrication are too high.

In US 5,344,723 by Bronoel et al., a bipolar battery is disclosed having a common gas chamber, which is created by providing an opening through the biplate (conductive support/separator). The opening is also provided with a hydrophobic barrier to prevent passage of electrolyte through the hole. Although the problem with pressure differences between the cells is solved, there is still a disadvantage with the described battery. The outer sealing around the edge of each biplate still has to be fluid-tight, which is very difficult to achieve. If the outer sealing is not fluid-tight, the electrolyte, contained in the separator between the electrodes and in the electrodes, may still form a continuous ionic current leakage path from one cell to another.

In US 5,441,824 by Rippel, a bipolar battery is disclosed where the structure of the battery attempts to address problems inherent when using the corrosive lead-acid chemical system in a bipolar configuration. In the construction taught by Rippel, the biplate edges are encapsulated within a gas-tight continuous compliant frame material. As well, the separator edges are also similarly encapsulated in a gas-tight continuous complaint frame having gas channels formed into them. Such encapsulation processes are expensive and difficult to accomplish in a reliable, manufacturable fashion. The frame design disclosed by Rippel has comparatively large areas present along the sealing surfaces. As a result, large forces are needed to cause the required compressive strain in the disclosed frame necessary to induce a gas tight seal. This large force must be borne by the structure of the battery, resulting in larger size, higher weight and increased cost of the resulting battery. Rippel's disclosure also does not address the problem of ionic currents that may flow in the electrolyte present in the gas channels that can cause imbalanced self-discharge of individual bipolar electrodes in the battery.

The use of a common manifold for primary (non-rechargeable) reserve batteries to be activated in the field by filling of the electrolyte immediately prior to use is well known in the art. In US 4,626,481 by Wilson, a flooded bipolar battery design using the primary reserve activated Li/SOCl₂ system is disclosed. This design comprises a frame encapsulating a biplate. This disclosure refers to this frame as an 'insulating layer'. Again, such a continuous encapsulation is expensive and more difficult to manufacture.

Wilson addresses the problem of reducing ionic currents that may flow in the electrolyte present in the gas channels by teaching use of a low conductivity electrolyte, which is clearly undesirable in a starved electrolyte secondary battery when high power density is desired.

In the published international patent application WO 03/026042 A1, assigned to the present applicant, a different solution, compared to the solution described in US 5,344,723, is proposed where a hydrophobic barrier is introduced around the electrodes instead of around the opening in the biplate. A pressure relief valve is also introduced to prevent a too high pressure to build up inside the case. It is however rather expensive to manufacture a bipolar battery of this design in large quantities and therefore there is a need to construct a new bipolar battery having a smaller quantity of components, using simpler processing techniques to manufacture a bipolar battery.

In the published international patent application WO 2005/048390 A1, assigned to the same applicant, a bipolar battery design is disclosed. The bipolar battery has a gasket made from a hydrophobic material with a built-in gas channel arranged between adjacent biplates, wherein the gas channels within the gaskets create a common gas space within the battery and at the same time electrolyte is prevented from migrating between cells. However, a high degree of mechanical preloaded force needs to be maintained over the gaskets to achieve these objectives, which in turn requires an outer casing that may withstand the stress that will result from the force needed. Teaching of details regarding top level construction resulting in a finished starved electrolyte bipolar battery is found in this published international patent application WO 2005/048390 A1.

### Summary of the invention

An object of the present invention is to provide a gasket that will reduce the mechanical preloaded force needed over the gaskets to maintain a sealed gas space, and prevent wet electrolyte bridging that can allow ionic currents to flow between cells within a bipolar battery.

This object is achieved by providing a gasket according to claim 1.

An advantage is that the reduced facing area of the deformed sealing surface when assembled into a battery results in less required compressive force needed to maintain a seal.

Another advantage with the present invention is that a less rigid and lighter casing may be used to maintain a pressure tight seal and a common gas space within the battery. This in turn reduces the weight of the completed bipolar battery compared to prior art batteries.

Another advantage is that the present invention provides additional cost and assembly benefits compared to prior art devices.

Another advantage with the present invention is that a stack of gaskets within a bipolar battery is more stable than a bipolar battery provided with prior art gaskets.

Still another advantage with the present invention is that a better seal uniformity is achieved since a more deformable part is providing the sealing.

Further objects and advantages of the present invention will be apparent to those skilled in the art from the following detailed description of the disclosed bipolar electrochemical battery and the biplate assembly.

### Brief description of the drawings

The different embodiments shown in the appended drawings are not to scale or proportion, but exaggerated to point out different important features for the sake of clarity.
Fig. 1 shows a prior art gasket.
Figs. 2a and 2b show cross-sectional views of the prior art gasket in figure 1.
Figs. 3a and 3b show a first embodiment of a gasket according to the present invention.
Figs. 4a and 4b show cross-sectional views of the gasket in figures 3a and 3b.
Figs. 5a and 5b show a second embodiment of a gasket according to the present invention.
Figs. 6a and 6b show cross-sectional views of the gasket in figures 5a and 5b.
Fig. 7 shows a cross-sectional view of a first embodiment of a bipolar battery according to the invention.
Fig. 8 shows a flow chart for manufacturing a gasket according to the invention.
Fig. 9 shows a third embodiment of a gasket according to the present invention.
Figs. 10a and 10b show cross-sectional views of the gasket in figure 9.
Fig. 11 shows a fourth embodiment of a gasket according to the present invention.
Figs. 12a and 12b show cross-sectional views of the gasket in figure 11.
Fig. 13 shows a cross-sectional view of a second embodiment of a bipolar battery according to the invention.

### Detailed description of preferred embodiments

The major benefits of the bipolar battery design are simplicity and low resistance losses. The parts count of the battery is relative low, consisting only of endplates and biplates, with appropriate assembly of electrodes, separators and electrolyte and sealing components. Batteries of a desired voltage are constructed by stacking the required number of biplates. The electrical connections between the cells are made as the battery is stacked, since each biplate is electrically conductive and impervious to electrolyte.

With the terminals at each end, the flow of current is perpendicular to the plate, which ensures uniform current and voltage distribution. Since the current path is very short the voltage drop is significantly reduced.

Bipolar batteries will also have significantly reduced weight, volume and manufacturing costs due to elimination of components and the manufacturing approach.

The major problem with bipolar batteries is obtaining a reliable seal between cells within the bipolar battery. Different solutions to this problem have been disclosed in the published international patent applications WO 03/009413, WO 03/026055 and WO 03/026042, and in the published pending US applications US2004/0091784 and US2005/0260493, all assigned to the present applicant, and hereby incorporated by reference.

The seal on a cell is of extreme importance for all types of batteries, and bipolar batteries are no exception. Individual cells contain the active materials (for NiMH batteries it is Nickel hydroxide positive and metal hydride hydrogen storage alloy negative, respectively), separator and electrolyte. The electrolyte in the separator is required for ion transport between the electrodes and the separator provides insulation to the conduction of electronic current flow between the electrodes. The best designs, optimized for longevity, weight and volume, require recombination of gasses.

Batteries always produce gasses as they are charged. The gassing rate increases as the battery nears full charge, and reaches maximum when fully charged. The gasses which are produced are primarily oxygen and hydrogen.

For Nickel based bipolar batteries, such as NiMH and NiCd, oxygen will recombine relatively rapidly with available chemically active material in the negative electrode. Batteries are normally designed so oxygen will be the first gas generated if the cell is overcharged. This requires two actions:
1) Overbuild the negative active material, generally by 30%, to ensure that the positive electrode, which will gas oxygen on charge, will be the first to gas.
2) In a starved electrolyte battery, provide for gas passage from the positive to the negative, where the oxygen will recombine. The gas passages are obtained by controlling the amount of electrolyte within the pores of the electrode and through the separator. The surfaces of the electrode must be covered by a thin layer of electrolyte for the transport of ions, but the layer must be thin enough to permit gas diffusion through the layer, and must allow gas passages throughout the active layers and the separator.

The negative electrode alone would gas hydrogen if overcharged. Because gaseous hydrogen does not recombine quickly, pressure would build up within the cell. If the rate of transport of oxygen across the cell from the positive electrode is not unduly impeded, then the oxygen recombination effectively discharges the negative at the same rate it is being charged, thus preventing overcharge of the negative.

The surface area of the active material, the porosity of the electrode, and, the presence of gas passages within the porous volumes in the battery components enhance rapid recombination.

For clarity sake, a starved electrolyte battery is defined as is an essentially moist but not wet construction, as opposed to flooded batteries like a typical lead acid car battery.

The bipolar approach helps ensure that the voltage drop across the active material will be uniform in all areas, so that the entire electrode across its facing area will come up to full charge at the same time. This is due to the more uniform distribution of current density across the electrode face present in the bipolar approach. This help reduce the major problem of inhomogeneous charge across the electrode area found in many conventional constructions, where parts of an electrode are overcharging and gassing while other (remote) areas of the electrode are not yet fully charged.

The cells in regular batteries are sealed to contain the gases and electrolyte both for proper performance of the cells, and to prevent electrolyte paths, i.e. continuous ionically conductive paths, between adjacent cells. The presence of electrolyte paths between cells will allow the electrodes of the electrolyte-connected cells to discharge at a rate that is determined by the resistance of the path (length of path and cross section of path). The seals on bipolar batteries are more important because the electrolyte path is potentially much shorter. It should be noted that an important feature of this disclosure is the use of a gasket with an integrated electrolyte barrier to minimize or eliminate the conductivity of any potential ionic conduction path. An additional concern is the amount of heat generated by operation of the cell. Depending on the magnitude of heat generated, the design must be able to reject the heat and maintain a safe operating temperature.

If an electrolyte path is developed between cells, a small intercellular leakage can be overcome by the periodic full charging of the battery. The battery may be overcharged by a set amount and at a low rate. The low rate would allow fully charged cells to recombine gasses without generating excessive pressure and also allow for easier conduction of the heat from the recombination/overcharge away from the battery. Cells that have small intercellular electrical leakage paths would become balanced.

It is rarely necessary that a battery be fully charged to achieve its useful function. Batteries are routinely over specified and overbuilt. If an application requires 50 AH (Ampere Hours), the requirement is usually specified at least 10% higher. Since batteries lose capacity over their lifetime, the capacity of a new battery is increased by the expected loss, resulting in possibly a 70 AH requirement for a new battery in this example. The manufacturer will probably have a median design target of 75 AH to allow for variations in the manufacturing process. Some of this overbuild is to compensate for the life capacity degradation that is caused by the overcharging.

An essential feature in the prior art bipolar batteries are the creation of a common gas space within the battery. The means for creating a common gas space for all cells in a bipolar battery comprises a gasket having a predetermined shape. The gasket is arranged between adjacent biplates and/or a biplate and an end plate, as described below. The gasket is preferably made with a thermoplastic elastomer compound that forms a seal with the biplate under pressure. One or more gas channels are molded into the frame to ensure a continuous gas transmission path. When several gaskets are stacked upon each other a common gas space will be created which will eliminate the pressure difference between the cells in a bipolar battery. Note that such a common gas space is sealed from the ambient environment.

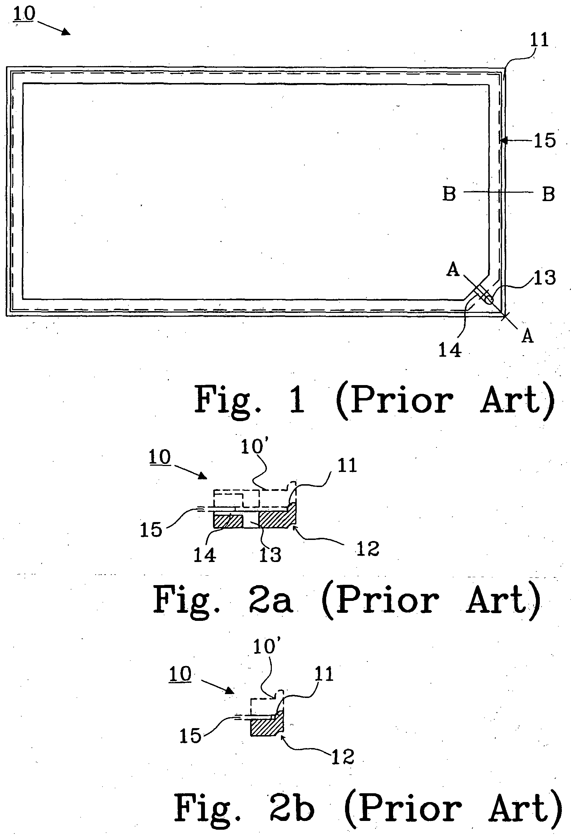

Figure 1 shows a prior art gasket 10. The gasket 10 is manufactured in a hydrophobic material having deformable properties, such as an elastomer or other material that create a continuous seal when deformed, to be able to function as a sealing. The gasket has elastic properties, and a suitable material is a thermoplastic elastomer. Thermoplastic elastomers may be obtained from several manufacturers e.g. Engage® 8407 available from DuPont Dow Elastomers, DYNAFLEX® G2780-001 available from GLS Corp. or KRATON™ G-7705 available from Kraton™ Polymers. The gasket is injection molded into the desired size and shape.

The gasket 10 is provided with a rim 11 at the edge on the upper surface and a corresponding indentation 12 on the reverse surface. The rim 11 and the indentation 12 will provide alignment of the gaskets when they are stacked upon each other in an assembled battery. The rim further serves to align the biplate relative to the gasket. The gasket is further provided with a through-hole 13 and a groove 14 to connect the through-hole 13 to the space on the inside of the gasket 10 when a biplate is mounted to the gasket. The through-hole 13 and the groove 14 provide a gas channel between adjacent cells in the assembled battery, and the hydrophobic properties of the gasket prevent electrolyte from creating an ionically conductive path between adjacent cells. The gasket thus has four purposes when mounted:
1) prevent electrolyte from creating an ionically conductive path (leakage) between adjacent cells in a bipolar battery,
2) provide a gas channel between adjacent cells to create a common gas space within a bipolar battery,
3) provide an outer pressure tight seal for the cells in a bipolar battery, and
4. provide an electronically insulating support structure between biplates and between the biplates and the endplates.

Figure 2a shows a cross-sectional view of the gasket in figure 1 along A-A, and figure 2b shows a cross-sectional view of the gasket in figure 1 along B-B. The presence of a second gasket 10' is indicated in the figures to further show how the rim 11 is intended to be received in the indentation when mounted in a battery.

A biplate 15 is shown with a dashed line in figures 1, 2a and 2b to indicate the position of a biplate 15 in an assembled bipolar battery. A portion of the groove 14 is covered by a biplate 15 to prevent electrolyte leakage between cells. A biplate with a hole aligned with the hole in the gasket may alternatively be employed to serve the purposes listed here.

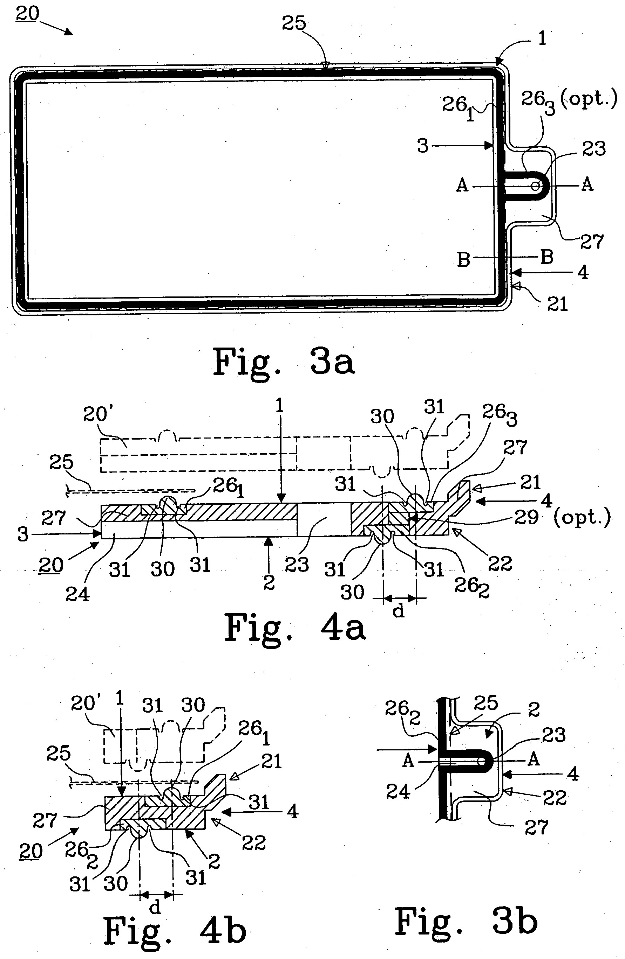

Figure 3a shows a top view of a first embodiment of a gasket 20 according to the invention. The gasket 20 comprises a structural part 27 that is in this embodiment is provided with a rim 21 at an outer surface 4, at the edge on an upper surface 1 and a corresponding indentation 22 on a reversed, lower surface 2, see figure 3b. The rim 21 and the indentation 22 will provide alignment of the gaskets 20 when they are stacked upon each other in an assembled bipolar battery, as indicated in figures 4a and 4b. The structural part 27 of the gasket 20 is provided with one through-hole 23 between the upper surface 1 and the lower surface 2, with a groove 24 to create a channel from the through-hole 23 to an inner surface 3 of the structural part 27, and thus the space contained inside the gasket 20 when a biplate 25 is mounted to the gasket on both upper 1 and lower 2 surfaces. The through-hole 23 and the groove 24 provide a gas channel between adjacent cells in the assembled battery. A biplate 25 is also shown with a dashed line to indicate the position of a biplate 25 in an assembled bipolar battery. Figure 3b shows a bottom view of the first embodiment of the gasket 20 in the region containing section A-A in Figure 3a.

The gasket comprises in, this embodiment, two parts the structural part 27 and a sealing part 26 having more deformable properties than the structural part 27. Thus, the material used for the sealing part 26 has a smaller elastic modulus compared to the material used for the structural part 27, which has a greater elastic modulus. The structural part 27 is formed as a frame and acts as a reinforcement of the gasket 20 to provide a mechanical structure. Note that the structural part 27 does not form a continuous encapsulation the biplate 25, as is taught in some of the prior art.

The commonly denoted sealing part 26 is comprised of a first sealing part 26₁ arranged in a closed loop along the frame on the upper surface 1 of the structural part 27, and a second sealing part 26₂ arranged in a closed loop along the frame on the lower surface 2 of the structural part 27 outside the hole 23, as indicated in figures 3a and 3b. Furthermore, a third sealing part 26₃ is circumventing the hole 23 on the upper surface 1 and is joined with the first sealing part 26₁. The first and second sealing parts 26₁ and 26₂ will provide sealing that prevents electrolyte from migrating between adjacent battery cells when mounted in a bipolar battery. The third sealing part 26₃ shown in this embodiment is optional and will enable vacuum filling the battery with electrolyte, as has been disclosed in WO 2005/048390 A1, which is hereby incorporated as reference.

Each sealing part 26 has a sealing surface projecting out from the respective surface of the structural part 27, each sealing surface comprises a ridge 30 that extend along the closed loop. In a preferred embodiment a recess 31 is provided on each side of the ridge 30 along the closed loops. The sealing is obtained by deforming the projecting surface, i.e. the ridge 30, of each sealing part 26 against the biplate 25 or against the surface of an adjacently arranged gasket as outlined in figures 4a and 4b. If recesses 31 are present, material from the ridge 30 will deform into the recesses 31 when compressed.

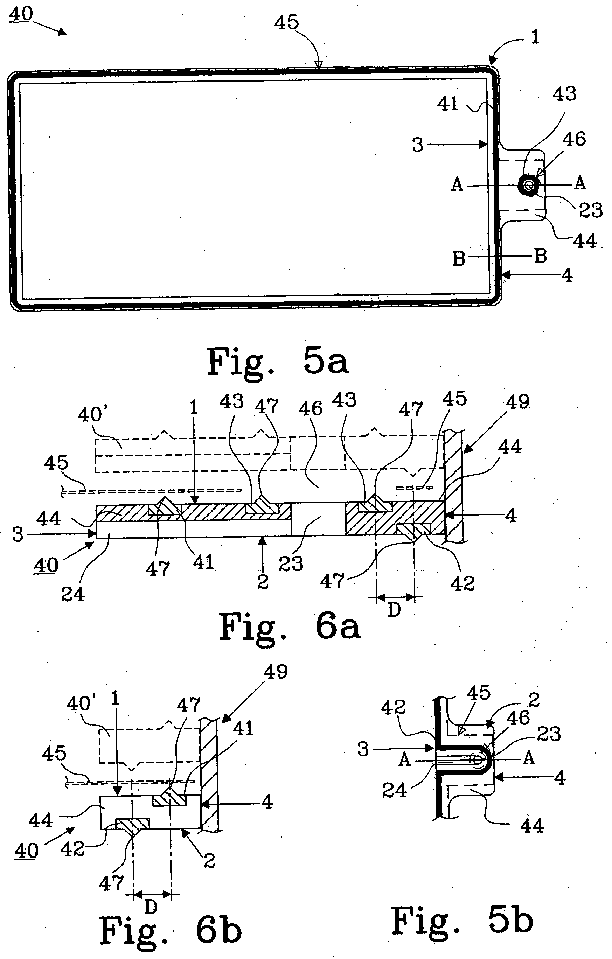

The structural part 27 is preferably manufactured in one piece, and the sealing part 26 is preferably molded in one piece using an overmolding technique, as described in more detail below. Regularly spaced openings 29 are provided in the structural part 27 along the frame, and the sealing part 26 is preferably injection overmolded onto the structural part 27 using these openings 29 to distribute the smaller elastic modulus material used to create the first 26₁, the second 26₂, and optionally the third 26₃ sealing part at the same time in a topologically connected manner. The technique of overmolding elastomeric materials onto more rigid substrates is well known in the art of plastic part manufacturing, and is not described in further detail here. It is of course possible to manufacture one or more of the sealing parts individually in a topologically disconnected manner, as indicated in figures 5a, 5b, 6a and 6b. These sealing parts are preferably formed onto the structural part 27 using injection molding, and may also be fabricated separately and assembled into a completed gasket 20. The structural part may be manufactured using casting or machining, but is preferably injection molded before the sealing parts 26 are provided to complete the gasket 20.

Figure 4a is a cross-sectional view along A-A in figures 3a and 3b, and figure 4b is a cross-sectional view along B-B in figure 3a. The presence of a second gasket 20' is indicated in the figures to further show how the rim 21 is intended to be received in the indentation 22 when mounted in a battery.

A biplate 25 is shown with a dashed line in figures 3a, 3b, 4a and 4b to indicate the position of a biplate 25 in an assembled bipolar battery. The sealing surface, i.e. a portion of the ridge 30, at least on the upper surface 1 of the gasket 20, is configured to be positioned in contact with a biplate 25 to prevent electrolyte leakage between cells when mounted in a bipolar battery. A biplate with an opening aligned with the hole 23 in the gasket 20 may alternatively be used to serve the purposes listed above.

In this embodiment, locations of the first 26₁ and second 26₂ sealing parts are at least partially overlapping as projected onto an imaginary plane parallel to the upper surface of the structural part in a direction perpendicular to the upper surface 1 of the structural part 27. Thus, an offset "d" is present between the ridge 30 on the upper surface 1 compared to the ridge 30 on the lower surface 2 of the gasket 20. The reason for this is to ensure that either ridge 30 will be deformed, either direct or indirect via a biplate 25, against the structural part 27 of an adjacent gasket 20' as indicated in figures 4a and 4b. In section A-A, only one ridge 30 is present on the left side upper surface 1 since the groove 24 providing the gas channel is present on the lower surface. The hydrophobic properties of the material used for the structural part 27 will ensure that a continuous ionic current path conducted by electrolyte through the gas channel is inhibited between adjacent cells when mounted in a bipolar battery.

Thus, locations of the first 26₁ and second 26₂ sealing parts are in this embodiment at least partially overlapping as projected onto an imaginary plane parallel to the upper surface of the structural part in a direction perpendicular to the upper surface of the structural part 27.

Figure 5a shows a top view, and figure 5b shows a reverse view, of a second embodiment of a gasket 40 according to the invention. Reference numbers indicating features described in connection with figures 3a and 3b have been used to denote similar or identical features in figures 5a and 5b. The gasket 40 comprises, in this embodiment, four parts, a structural part 44 and three separate sealing parts 41, 42 and 43 having more deformable properties than the structural part 44. Thus, the material used for sealing parts 41, 42 and 43 has a smaller modulus compared to the material used for the structural part 44, which has a greater modulus. The structural part 44 is formed as a frame and acts as a reinforcement of the gasket 40 to provide a mechanical structure, as described in connection with figures 3a and 3b.

A biplate 45 provided with an opening 46 aligned with the hole 23, when placed at a mounting position, is outlined in figures 5a, 5b, 6a and 6b with dashed lines. The first sealing part 41 is arranged in a closed loop along the frame of the upper surface 1 of the structural part 44, and the second sealing part 42 is arranged in a closed loop along the frame of the lower surface 2 of the structural part outside the hole 23, as indicated in figures 5a and 5b. A third sealing part 43 is circumventing the hole 23 on the upper surface 1. The purposes of the first, second and third sealing parts are the same as described above.

Each sealing part has a sealing surface projecting out from the respective surface of the structural part 44, each sealing surface comprises a tapered ridge 47 that extend along the closed loop. The sealing is obtained by deforming the projecting surface, i.e. the ridge 47, of each sealing part against the biplate 45 as outlined in figures 6a and 6b. The rim and the corresponding indentation may be omitted, as indicated in figures 5a, 5b, 6a and 6b, if other means to align the gasket is used, such as arrangement the gaskets in an appropriately designed casing.

The structural part 44 is in this embodiment preferably manufactured in one piece by casting, machining, or molding. Each sealing part 41, 42 and 43 is separately molded, preferably injection molded, onto the structural part 44 in contrast to the embodiment described in connection with figures 3a, 3b, 4a and 4b. Each sealing part 41, 42 and 43 could also be formed in a separate manufacturing process and assembled later to form the gasket 44.

Figure 6a is a cross-sectional view along A-A in figures 5a and 5b, and figure 6b is a cross-sectional view along B-B in figure 5a. The presence of a second gasket 40' is indicated together with a section of a casing 49 in the figures to further show the gaskets may be aligned without a rim and indentation when mounted in a battery.

A biplate 45 is shown with a dashed line in figures 6 and 6b to indicate the position of a biplate 45 in an assembled bipolar battery. The projecting surface, i.e. the tapered ridge 47, of the first sealing part 41 and the second sealing part 42 is configured to be positioned in contact with a biplate 45 to prevent electrolyte leakage between cells when mounted in a bipolar battery. An opening 46 in the biplate 45 is aligned with the hole 23 in the gasket 40 to serve the purposes listed above.

In this embodiment, locations of the first 41 and second 42 sealing parts are non-overlapping as projected onto an imaginary plane parallel to the upper surface of the structural part in a direction perpendicular to the upper surface 1 of the structural part 27. Thus, an offset "D" is present between the ridge 47 on the upper surface 1 compared to the ridge 47 on the lower surface 2 of the gasket 40. The reason for this is to ensure that either ridge 47 will be deformed, either direct or indirect via a biplate 45, against the structural part 44 of an adjacent gasket 40' as indicated in figures 6a and 6b. In section A-A, only one ridge 47 is present on the left side upper surface 1 since the groove 24 providing the gas channel is present on the lower surface 2. The hydrophobic properties of the material used for the structural part 44 will ensure that the migration of electrolyte through the gas channel is prevented between adjacent cells when mounted in a bipolar battery.

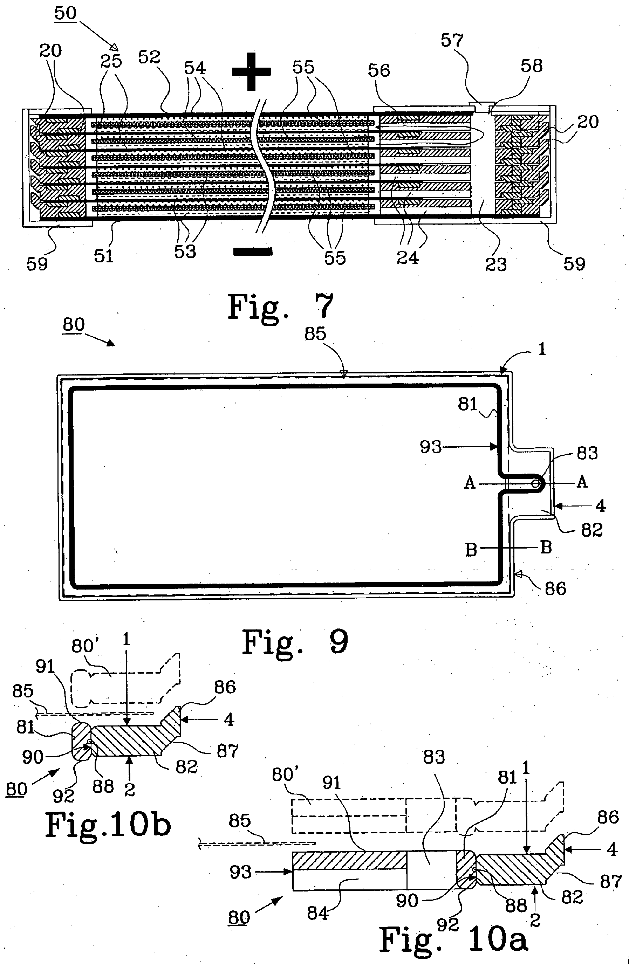

Figure 9 shows a top view of a third embodiment of a gasket 80 according to the invention. Reference numbers indicating features described in connection with previous embodiments have been used to denote similar or identical features in figure 9. The gasket 80 comprises, in this embodiment, two parts, a structural part 82 and a common sealing part 81 having more deformable properties than the structural part 82. Thus, the material used for sealing part 81 has a smaller modulus compared to the material used for the structural part 82, which has a greater modulus. The structural part 82 is formed as a frame and acts as a reinforcement of the gasket 80 to provide a mechanical structure, as described in connection with the previous embodiments.

Figure 10a is a cross-sectional view along A-A in figure 9, and figure 10b is a cross-sectional view along B-B in figure 9. The structural part 82 is in this embodiment provided with a rim 86 at an outer surface 4, at the edge on an upper surface 1, and a corresponding indentation 87 on a reversed, lower surface 2. The presence of a second gasket 80' is indicated in the figures to further show how the rim 86 is intended to be received in the indentation 87 when mounted in a battery. The rim 86 and the indentation 87 will provide alignment of the gaskets 80, 80' as discussed in connection with figures 3a and 3b. The common sealing part 81 of the gasket 80 is provided with one through-hole 83 between an upper surface 91 and a lower surface 92, with a groove 84, see figure 10b, to create a channel from the through-hole 83 to an inner surface 93 of the common sealing part 81, and thus the space contained inside the gasket 80 when a biplate 85 is mounted to the gasket on both upper 1 and lower 2 surfaces. The through-hole 83 and the groove 84 provide a gas channel between adjacent cells in the assembled battery. A biplate 85 is also shown with a dashed line to indicate the position of a biplate 85 in an assembled bipolar battery.

The common sealing part 81 is provided with two sealing surfaces 91 and 92. The upper sealing surface 91 extends in a direction away from and perpendicular to the upper surface 1 of the structural part 82, thus the upper sealing surface 91 projects out from the upper surface 1. The lower sealing surface 92 extends in a direction away from and perpendicular to the lower surface 2 of the structural part 82, thus the lower sealing surface 92 projects out from the lower surface 2. The common sealing part is preferably attached to an inner surface 90 of the structural part 82 by molding and projections 88 may be provided on the inner surface 90 to further improve the bonding.

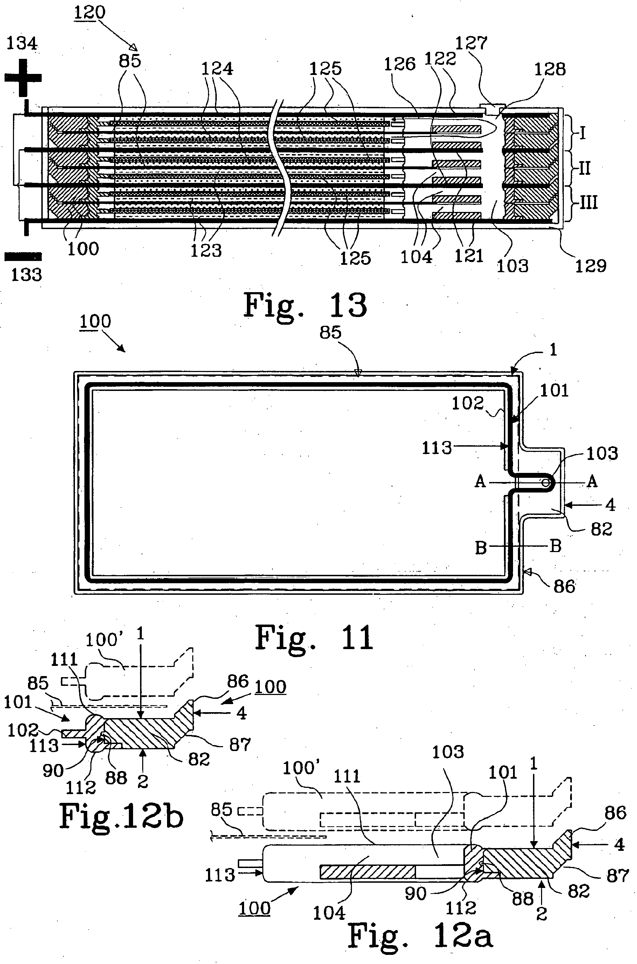

Figure 11 shows a top view of a fourth embodiment of a gasket 100 according to the invention. Reference numbers indicating features described in connection with previous embodiments have been used to denote similar or identical features in figure 11. The gasket 100 comprises, in this embodiment, two parts, a structural part 82 and a common sealing part 101 having more deformable properties than the structural part 82. Thus, the material used for sealing part 101 has a smaller modulus compared to the material used for the structural part 82, which has a greater modulus. The structural part 82 is described in connection with figure 9, and is formed as a frame and acts as a reinforcement of the gasket 100 to provide a mechanical structure, as described in connection with the previous embodiments. The common sealing part 101 is similar to the common sealing part 81 described in connection with figures 9, 10 and 10b, with the addition of a lip 102 that projects out from an inner surface 113 of the common sealing part 101.

Figure 12a is a cross-sectional view along A-A in figure 11, and figure 12b is a cross-sectional view along B-B in figure 11. The structural part 82 is in this embodiment provided with a rim 86 and a corresponding indentation 87 as described in connection with figures 10a and 10b. The presence of a second gasket 100' is indicated in the figures to further show how the rim 86 is intended to be received in the indentation 87 when mounted in a battery. The rim 86 and the indentation 87 will provide alignment of the gaskets 100, 100' as discussed in connection with figures 3a and 3b. The common sealing part 101 of the gasket 100 is provided with one through-hole 103 between an upper surface 111 and a lower surface 112, with a groove 104, see figure 12b, to create a channel from the through-hole 103 to an inner surface 113 of the common sealing part 101, and thus the space contained inside the gasket 100 when a biplate 85 is mounted to the gasket on both upper 1 and lower 2 surfaces. The through-hole 103 and the groove 104 provide a gas channel between adjacent cells in the assembled battery. The biplate 85 is also shown with a dashed line to indicate the position of the biplate 85 in an assembled bipolar battery.

The common sealing part 101 is provided with two sealing surfaces 111 and 112. The upper sealing surface 111 extends in a direction away from and perpendicular to the upper surface 1 of the structural part 82, thus the upper sealing surface 111 projects out from the upper surface 1. The lower sealing surface 112 extends in a direction away from and perpendicular to the lower surface 2 of the structural part 82, thus the lower sealing surface 112 projects out from the lower surface 2. The common sealing part is preferably attached to an inner surface 90 of the structural part 82 by molding and projections 88 may be provided on the inner surface 90 to further improve the bonding.

The presence of the lip 102 along the inner surface 113 of the common sealing part 101 has the function of positioning a separator in an assembled bipolar battery, as is shown in connection with figure 13. An advantage with the lip 102 is that it prevents positive active material from a positive electrode to accidentally make contact with negative active material from a negative electrode when assembling a battery cell during manufacture or during operation. Furthermore, the lip 102 will also improve the flow of material during manufacture of the gasket since a larger volume of material to produce the common sealing part is needed.

Preferably, the material used for the sealing parts also has hydrophobic properties. A thermoplastic elastomer VERSAFLEX® CL2250 available from GLS Corp. is a suitable material for the sealing parts, and polypropylene, which is available from many suppliers, is a suitable material for the structural part. It is preferable that the material chosen for the sealing parts be chemically compatible with the electrolyte used. In an alkaline battery such as NiMH, compatibility with Potassium Hydroxide is typically required. This material should preferably be chosen to have properties such as low compression set and low creep.

It may be advantageous, but not necessarily required, to alter the design of the gasket in contact with the endplates to better nest and seal with the endplates. The endplates may have a different size than the biplates, so the gasket may need to conform to the different size.

Herein we refer to the top and bottom of gaskets as well as the upper and lower surface of gaskets and their constituent parts. It is understood that this terminology is used to describe the spatial relationship of the parts relative to each other, and does not imply that neither the parts nor the battery that comprises them need be oriented in any special way relative to gravity for their assembly, function, or operation.

Figure 7 shows, as a non-limiting example, a first embodiment of a starved electrolyte bipolar battery 50 in cross section having six cells arranged within a case 59. The battery comprises a negative end plate 51 and a positive end plate 52, each having a negative electrode 53 and a positive electrode 54, respectively. Five biplate assemblies, comprising a negative electrode 53 a biplate 25, and a positive electrode 54, are stacked on top of each other in a sandwich structure between the two end plates 51 and 52, which are accessible from the outside. A separator 55 is arranged between each adjacent negative and positive electrodes making up a cell, the separator 55 contains an electrolyte and a predetermined percentage of gas passages, about 5 % is a typical value for gas passages in the porous volume of starved electrolyte batteries. The common gas manifold remains essentially dry, containing a negligible amount of electrolyte, if any.

A gasket 20, as described in connection with figure 3a, 3b 4a and 4b, is provided between adjacent biplates 25 and/or a biplate 25 and an end plate 51 or 52. Each gasket is provided around the periphery of a battery cell and the sealing surfaces of the gasket is deformed when a force is applied over the gasket and thereby create a seal against the biplate or endplate to prevent electrolyte leakage between the battery cells. A gas channel is also provided to permit gas to pass through the gasket as indicated in the figure by the arrow 56, whereby gas may flow from one cell to another and thereby all cells share a common gas space through the gas channels in the gasket. If an electrode in a cell starts to gas before the others, this pressure will be distributed through-out the whole common gas space. The gas will pass from a cell, through a groove 24 and via a through-hole 23 of a first gasket to a groove 24 of a second gasket, and thereafter into a second cell.

If the pressure within the common space exceeds a predetermined value, a pressure relief valve 57 will open to connect the common gas space with the ambient environment. The pressure relief valve 57 is arranged through one of the end plates, in this example the positive end plate 52 and comprises a feed-through 58. In an alternative embodiment, the feed-through 58 may be integrally formed onto the endplate 52.

The purpose of the case 59 is to provide the mechanical preloaded force needed over the stacked gaskets 20 to maintain the sealed gas space. Note that a non-sealed case that provides a required mechanical preloaded force may be used to create an operational bipolar battery with gaskets as described above. The gaskets described in connection with figures 5a, 5b and 9 may naturally be used instead of the gaskets 20 used in the bipolar battery 50.

Figure 13 shows, as a non-limiting example, a second embodiment of a starved electrolyte bipolar battery 120 in cross section having six cells arranged within a case 129. The battery has a bipolar prismatic hybrid stacking configuration, whereby the battery is divided into three sections I, II and III. Each section is provided with a negative end plate 121 and a positive end plate 122, each having one or two negative electrodes 123 and one or two positive electrodes 124, respectively. Negative end plate 121 is shared by sections I and II. Positive end plate 122 is shared by sections II and III. One biplate assembly, comprising a negative electrode 53 a biplate 85, and a positive electrode 54, are stacked on top of each other in a sandwich structure between the two of the end plates 121 and 122, which are accessible from the outside. Each section can be conceived as an individual bipolar stack, wherein each section is arranged adjacent to another section in a prismatic manner. A separator 125 is arranged between each adjacent negative and positive electrodes making up a cell, and the separator 125 contains an electrolyte and a predetermined percentage of gas passages, about 5 % is a typical value for gas passages in the porous volume of starved electrolyte batteries. The common gas manifold remains essentially dry, containing a negligible amount of electrolyte, if any.

The polarity of the stacked battery cells are the same for section I and III, and the polarity is reversed for section II. The negative endplates 121 are connected to a negative terminal 133 and the positive endplates 122 are connected to a positive terminal 134, as illustrated in the drawing. The resulting complete stack of sections as connected to the terminals 133 and 134 results in the bipolar battery 120 comprised of the individual sections each electrically connected in parallel with each other.

A gasket 100, as described in connection with figure 11, 12a and 12b, is provided between a biplate 85 and an end plate 121 or 122. Each gasket is provided around the periphery of a battery cell and the sealing surfaces of the gasket is deformed when a force is applied over the gasket and thereby create a seal against the biplate or endplate to prevent electrolyte leakage between the battery cells. A gas channel is also provided to permit gas to pass through the gasket as indicated in the figure by the arrow 126, whereby gas may flow from one cell to another and thereby all cells share a common gas space through the gas channels in the gasket. If an electrode in a cell starts to gas before the others, this pressure will be distributed through-out the whole common gas space. The gas will pass from a cell, through a groove 104 and via a through-hole 103 of a first gasket to a groove 104 of a second gasket, and thereafter into a second cell.

If the pressure within the common space exceeds a predetermined value, a pressure relief valve 127 will open to connect the common gas space with the ambient environment. The pressure relief valve 127 is arranged through one of the end plates, in this example one of the negative end plates 121 and comprises a feed-through 128. In an alternative embodiment, the feed-through 128 may be integrally formed onto the endplate 122.

The purpose of the case 129 is to provide the mechanical preloaded force needed over the stacked gaskets 100 to maintain the sealed gas space. Note that a non-sealed case that provides a required mechanical preloaded force may be used to create an operational bipolar battery with gaskets as described above. The gaskets described in connection with figures 3a, 3b, 5a, 5b and 9 may naturally be used instead of the gaskets 100 used in the bipolar battery 120.

The advantage with the bipolar battery with the bipolar prismatic hybrid stacking configuration is that higher power may be drawn from the battery. This battery configuration is especially suitable for starter batteries in cars.

It is of course possible to build a bipolar battery having a bipolar prismatic stacking arrangement having any number of battery cells in each section, such as having only one battery cell or more than two battery cells, or any number of sections. The desired voltage of the bipolar battery will determine the number of battery cells required in each section, and the number of sections will determine the charge capacity of the battery.

A non-limiting example of a battery weights approximately 4.1 kg for a battery with the approximate size 28.0 cm x 13.0 cm x 5.3 cm. The battery has 3 sections; each section comprises 10 NiMH cells, and the charge capacity is 13 Ah at low discharge rate.

Tests have demonstrated: 500 Ampere 10 second DC current pulse, resulting in power density of approx 1.8 KW/liter and 860 Watts/Kg, ratings include complete overhead of casing and terminal weight and volume as manufactured in the power density calculation.

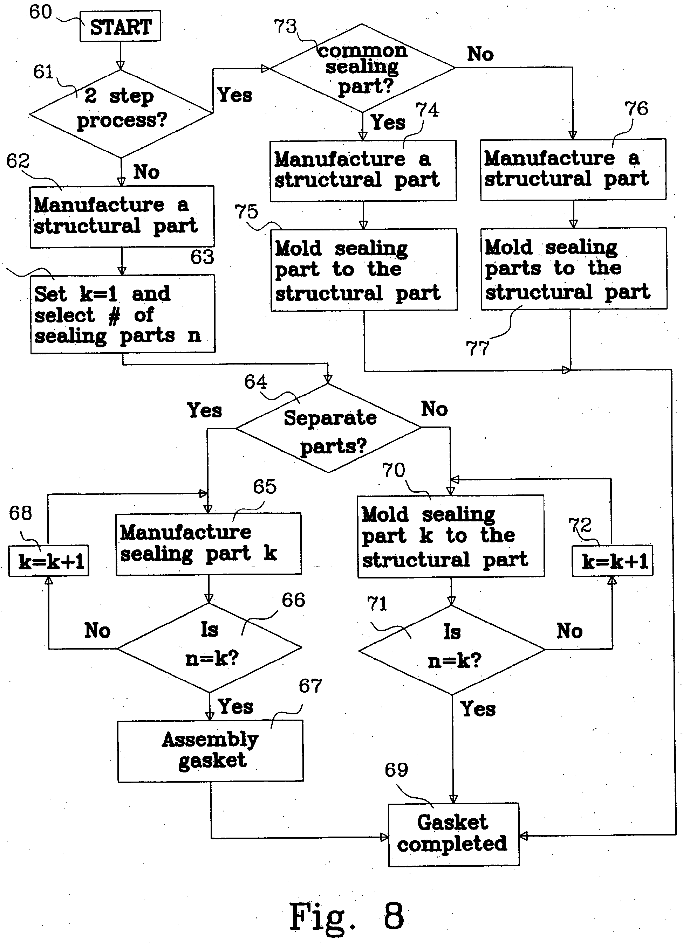

Figure 8 shows a flow chart for manufacturing a gasket according to the invention. The process start at step 60, and if the gasket is selected to be manufactured in more than two steps in step 61, the flow continues to step 62. A structural part is manufactured in step 62, in the shape of a frame from a first material having hydrophobic properties. A gas channel is provided through the structural part between upper and lower surfaces, and an inner surface of the structural part, and the gas channel is preferably provided only through the structural part. The first material preferably has an elastic modulus sufficiently high to provide a rigid structure.

The flow continues to step 63, wherein an integer k is set to 1 (k=1) and a variable n is set to the number of sealing parts desired, e.g. two separate parts (n=2). If the gasket is to be manufactured from separate parts, the flow proceeds to step 65 via step 64. A first sealing part is manufactured in step 65 from a second material having a lower elastic modulus compared to the elastic modulus of the first material. The first sealing material is manufactured in a closed loop, and second material preferably has hydrophobic properties. If n≠k in step 66, then the flow is fed back to step 65 via step 67 in which the integer k is increased by one, i.e. k=k+1. A second sealing part is thereafter manufactured in the repeated step 65 and the steps are repeated until n=k in step 66, and then the flow continues to step 68. The gasket is assembled in step 68 by arranging the separate sealing parts to the structural part in such a way that the closed loop of at least the first and a second sealing part are arranged along the frame on opposite surfaces of the structural part. The gasket is completed and the flow ends in step 69.

If a decision not to make separate parts is taken in step 61, the flow continues to step 70 in which the first sealing part is molded, preferably injection molded, from a second material on a surface of the structural part. If n≠k in step 71, then the flow is fed back to step 70 via step 72 in which the integer k is increased by one, i.e. k=k+1. A second sealing part is thereafter molded, preferably injection molded, to the structural part in the repeated step 70 and the steps are repeated until n=k in step 71. The gasket is then completed and the flow ends in step 69.

On the other hand if the gasket is selected to be manufactured in only two steps in step 61, the flow continues to step 73 wherein a decision is made whether a common sealing part is to be used. If a common sealing part is to be used, a structural part is manufactured in step 74, in the shape of a frame from a first material preferably having hydrophobic properties. The flow will continue directly to step 75 to mold the common sealing part to the structural part. The common sealing part made from a second material having a lower elastic modulus compared to the elastic modulus of the first material is provided in a closed loop along inner surface of the structural part. The sealing part is made in a molding process, preferably an injection molding process, and the second material has hydrophobic properties since a gas channel is provided through the common sealing part. The gasket is then complete and the flow ends in step 69.

On the other hand, if several sealing parts are to be used the flow continues to step 76 where a structural part is manufacture in the shape of a frame from a first material having hydrophobic properties. Openings are also provided along the frame of the structural part in step 76. A gas channel may also be provided through the structural part between upper and lower surfaces, and an inner surface of the structural part, and the gas channel is preferably provided only through the structural part. The first material preferably has an elastic modulus sufficiently high to provide a rigid structure.

The flow continues to step 77, in which at least sealing parts made from a second material having a lower elastic modulus compared to the elastic modulus of the first material are simultaneously provided in closed loops along the frame at least on an upper and lower surface of the structural part. The sealing parts are made in a molding process, preferably an injection molding process, and the second material preferably has hydrophobic properties. Other parts may also be molded simultaneously, e.g. circumscribing the hole of the gas channel in the structural part. The openings in the structural part provide the possibility to simultaneous molding of the sealing parts in an overmolding process. The gasket is then complete and the flow ends in step 69.

The structural part is preferably manufactured in an injection molding process, but may be manufactured using other types of techniques, such as machining and casting.

## Claims

1. A gasket (20; 40; 80; 100) for use in a starved electrolyte bipolar battery, said gasket comprising:
- a structural part (27; 44; 82) in the shape of a frame having an upper surface (1) and a lower surface (2), said structural part being made from a first material, and
- at least one channel (23, 24; 83, 84; 103, 104) to permit gas passage through the gasket (20; 40; 80; 100), **characterised in that**:
- said gasket (20; 40; 80; 100) further comprises at least a first sealing surface (30; 47; 91; 111) arranged in a closed loop along the frame projecting out from said upper surface (1), and at least a second sealing surface (30; 47; 92; 112) arranged in a closed loop projecting out from said lower surface (2), said at least first (30; 47; 91; 111) and second (30; 47; 92; 112) sealing surfaces are provided on at least one sealing part (26₁, 26₂; 41, 42; 81; 101) being made from a second material which is deformable,
- at least one of the first and the second materials having hydrophobic properties, and
- the first material of the structural part (27; 44; 82) has a higher elastic modulus than an elastic modulus of said second material of said at least one sealing part (26₁, 26₂; 41, 42; 81; 101).

2. The gasket according to claim 1, wherein said first material has hydrophobic properties.

3. The gasket according to any of claims 1 or 2, wherein said first sealing surface (91; 111) and said second sealing surface (92; 112) are provided on a common sealing part (81; 101) attached to an inner surface (90) of said structural part (82), and each channel (83, 84; 103, 104) is provided through the common sealing part (81; 101) between the first (91; 111) and the second (92; 112) sealing surfaces and an inner surface (93; 113) of the common sealing part (81, 101), and wherein said second material has hydrophobic properties.

4. The gasket according to claim 3, wherein each channel comprises at least one hole (83; 103) between the upper (91; 111) and lower (92, 112) surface of the common sealing part (81; 101), said hole (83; 103) being in communication with the inner surface (93; 113) of said common sealing part (81).

5. The gasket according to claim 1 or 2, wherein said first sealing surface is provided on a first sealing part (26₁; 41) and said second sealing surface is provided on a second sealing part (26₂; 42), and each channel (23, 24) is provided through the structural part (27; 44) between the upper (1) and lower (2) surfaces and an inner surface (3) of said structural part (27; 44).

6. A starved electrolyte bipolar battery (50; 120) having at least two electrochemical cells comprising:
- a case (59; 129),
- at least one negative endplate (51; 121) in contact with at least one negative electrode (53; 123),
- at least one positive endplate (52; 122) in contact with at least one positive electrode (54; 124),
- at least one set of a negative electrode (53; 123), a biplate (25; 45; 85) and a positive electrode (54; 124) arranged in a sandwich structure between one of said negative (51; 121) and positive (52; 122) endplates,
- at least one separator (55; 125) arranged between each negative (53; 123) and positive (54; 124) electrode forming a battery cell, said separator (55; 125) including an electrolyte, **characterised in that** said battery further comprises a gasket (20; 40; 80; 100) as defined in any of claims 1-5 is arranged around the periphery of each battery cell and configured to prevent electrolyte leakage between the battery cells and permit gas to pass through the gasket.

7. The battery according to claim 6, wherein the bipolar battery comprises only one positive endplate (51) and only one negative endplate, and a gasket is arranged between each biplate (25; 45; 85), and/or biplate (25; 45; 85) and the positive and negative endplate (51, 52).

8. The battery according to claim 7, wherein the bipolar battery (120) has a plurality of negative endplates (121) and a plurality of positive endplates (122) arranged to provide a bipolar prismatic hybrid stacking configuration.

9. The battery according to claim 8, wherein the bipolar battery (120) is divided into sections (I, II, III), each section comprising at least one battery cell.

10. A method for manufacturing a gasket for use in a starved electrolyte bipolar battery, said method comprises:
a) creating a structural part (27; 44; 82) in the shape of a frame having an upper surface (1) and a lower surface (2), said structural part (27; 44; 82) being made from a first material,
**characterized in that** said method further comprises:
b) attaching at least one sealing part (26₁, 26₂; 41, 42; 81; 101) having at least a first sealing surface (30; 47; 91; 111) arranged in a closed loop along the frame projecting out from said upper surface (1), and at least a second sealing surface (30; 47; 92; 112) arranged in a closed loop along the frame projecting out from said lower surface (2), said at least one sealing part (26₁, 26₂; 41, 42; 81; 101) being made from a second material,
c) selecting at least one of the first and the second materials to have hydrophobic properties, and
d) selecting the first material of the structural part (27; 44; 82) to have a higher elastic modulus than an elastic modulus of said second material of said sealing parts (26₁, 26₂; 41, 42; 81; 101), and
e) creating at least one channel (23, 24; 83, 84; 103, 104) through said gasket (20; 40; 80; 100).

11. The method according to claim 10, wherein said first material is selected to have hydrophobic properties.

12. The method according to claim 10 or 11, wherein the channel created in step e) is created through the at least one sealing part (81; 101), and wherein said second material is selected to have hydrophobic properties.

13. The method according to any of claims 10-12, wherein the channel created in step d) is created through the structural part (27; 44).

14. The method according to any of claims 10-13, wherein said first sealing surface (91; 111) and said second sealing surface (92; 112) are provided on a common sealing part (81; 101) attached to an inner surface (90) of said structural part (82).

15. The method according to any of claims 10 to 13, wherein said first sealing surface is provided on a first sealing part (26₁; 41) and said second sealing surface is provided on a second sealing part (26₂; 42).

## Patentansprüche

1. Dichtung (20; 40; 80; 100) zur Verwendung in einer verhungerten bipolaren Elektrolytbatterie, welche Dichtung umfasst:
- einen Konstruktionsteil (27; 44; 82) in Form eines Rahmens mit einer Oberfläche (1) und einer Unterfläche (2), welcher Konstruktionsteil aus einem ersten Material erzeugt ist, und
- zumindest einen Kanal (23, 24; 83, 84; 103, 104), um einen Gasdurchtritt durch die Dichtung (20; 40; 80; 100) zu ermöglichen, **dadurch gekennzeichnet, dass**:
- die Dichtung (20; 40; 80; 100) ferner zumindest eine erste Dichtungsfläche (30; 47; 91; 111), die entlang des Rahmens in einer geschlossenen Schleife angeordnet ist, die aus der Oberfläche (1) herausragt, und zumindest eine zweite Dichtungsfläche (30; 47; 92; 112), die in einer geschlossenen Schleife angeordnet ist, die aus der Unterfläche (2) herausragt, umfasst, wobei die zumindest erste (30; 47; 91; 111) und zweite (30; 47; 92; 112) Dichtungsfläche an zumindest einem Dichtungsteil (26₁, 26₂; 41, 42; 81; 101) vorgesehen sind, der aus einem verformbaren zweiten Material erzeugt ist,
- zumindest eines des ersten und des zweiten Materials mit hydrophoben Eigenschaften, und
- das erste Material des Konstruktionsteils (27; 44; 82) einen höheren Elastizitätsmodul als einen Elastizitätsmodul des zweiten Materials des zumindest einen Dichtungsteils (26₁, 26₂; 41, 42; 81; 101) aufweist.

2. Dichtung nach Anspruch 1, wobei das erste Material hydrophobe Eigenschaften aufweist.

3. Dichtung nach einem der Ansprüche 1 oder 2, wobei die erste Dichtungsfläche (91; 111) und die zweite Dichtungsfläche (92; 112) an einem gemeinsamen an einer Innenfläche (90) des Konstruktionsteils (82) befestigten Dichtungsteil (81; 101) vorgesehen sind, und jeder Kanal (83, 84; 103, 104) durch den gemeinsamen Dichtungsteil (81; 101) zwischen der ersten (91; 111) und der zweiten (92; 112) Dichtungsfläche und einer Innenfläche (93; 113) des gemeinsamen Dichtungsteils (81, 101) vorgesehen ist, und wobei das zweite Material hydrophobe Eigenschaften aufweist.

4. Dichtung nach Anspruch 3, wobei jeder Kanal zumindest ein Loch (83; 103) zwischen der Oberfläche (91; 111) und Unterfläche (92, 112) des gemeinsamen Dichtungsteils (81; 101) umfasst, wobei das Loch (83; 103) mit der Innenfläche (93; 113) des gemeinsamen Dichtungsteils (81) in Verbindung steht.

5. Dichtung nach Anspruch 1 oder 2, wobei die erste Dichtungsfläche an einem ersten Dichtungsteil (26₁, 41) vorgesehen ist, und die zweite Dichtungsfläche an einem zweiten Dichtungsteil (26₂; 42) vorgesehen ist, und jeder Kanal (23, 24) durch den Konstruktionsteil (27; 44) zwischen der Oberfläche (1) und der Unterfläche (2) und einer Innenfläche (3) des Konstruktionsteils (27; 44) vorgesehen ist.

6. Verhungerte bipolare Elektrolytbatterie (50; 120) mit zumindest zwei elektrochemischen Zellen umfassend:
- ein Gehäuse (59; 129),
- zumindest eine mit zumindest einer negativen Elektrode (53; 123) in Verbindung stehende negative Endplatte (51; 121),
- zumindest eine mit zumindest einer positiven Elektrode (54; 124) in Verbindung stehende positive Endplatte (52; 122),
- zumindest einen Satz von einer negativen Elektrode (53; 123), einer Doppelplatte (25; 45; 85) und einer positiven Elektrode (54; 124), die in einem Sandwich-Aufbau zwischen einer der negativen (51; 121) und positiven (52; 122) Endplatten angeordnet sind,
- zumindest einen Separator (55; 125), welcher zwischen jeder negativen (53; 123) und positiven (54; 124) Elektrode angeordnet ist, eine Batteriezelle bildend, welcher Separator (55; 125) einen Elektrolyten umfasst, **dadurch gekennzeichnet, dass** die Batterie ferner eine Dichtung (20; 40; 80; 100) nach einem der Ansprüche 1 bis 5 umfasst, die um den Umfang jeder Batteriezelle angeordnet und dazu ausgelegt ist, einen Elektrolytaustritt zwischen den Batteriezellen zu verhindern, und dem Gas den Durchtritt durch die Dichtung hindurch zu ermöglichen.

7. Batterie nach Anspruch 6, wobei die bipolare Batterie nur eine positive Endplatte (51) und nur eine negative Endplatte umfasst, und eine Dichtung zwischen jeder Doppelplatte (25; 45; 85) und/oder einer Doppelplatte (25; 45; 85) und der positiven und negativen Endplatte (51, 52) angeordnet ist.

8. Batterie nach Anspruch 7, wobei die bipolare Batterie (120) eine Mehrzahl von negativen Endplatten (121) und eine Mehrzahl von positiven Endplatten (122) aufweist, die so angeordnet sind, dass sie eine bipolare prismatische Hybridstapelkonfiguration bereitstellen.

9. Batterie nach Anspruch 8, wobei die bipolare Batterie (120) in Abschnitte (I, II, III) unterteilt ist, wobei jeder Abschnitt zumindest eine Batteriezelle umfasst.

10. Verfahren zum Herstellen einer Dichtung zur Verwendung in einer verhungerten bipolaren Elektrolytbatterie, welches Verfahren umfasst:
a) Gestalten eines Konstruktionsteils (27; 44; 82) in Form eines Rahmens mit einer Oberfläche (1) und einer Unterfläche (2), wobei der Konstruktionsteil (27; 44; 82) aus einem ersten Material erzeugt ist,
**dadurch gekennzeichnet, dass** das Verfahren ferner umfasst:
b) Befestigen zumindest eines Dichtungsteils (26₁, 26₂; 41, 42; 81; 101) mit zumindest einer ersten Dichtungsfläche (30; 47; 91; 111), die entlang des Rahmens in einer geschlossenen Schleife angeordnet ist, die aus der Oberfläche (1) herausragt, und zumindest einer zweiten Dichtungsfläche (30; 47; 92; 112), die entlang des Rahmens in einer geschlossenen Schleife angeordnet ist, die aus der Unterfläche (2) herausragt, wobei der zumindest eine Dichtungsteil (26₁, 26₂; 41, 42; 81; 101) aus einem zweiten Material erzeugt ist,
c) Auswählen zumindest eines des ersten und des zweiten Materials, so dass es hydrophobe Eigenschaften aufweist, und
d) Auswählen des ersten Materials des Konstruktionsteils (27; 44; 82), so dass es einen höheren Elastizitätsmodul als einen Elastizitätsmodul des zweiten Materials der Dichtungsteile (26₁, 26₂; 41, 42; 81; 101) aufweist, und
e) Gestalten zumindest eines Kanals (23, 24; 83, 84; 103, 104) durch die Dichtung (20; 40; 80; 100).

11. Verfahren nach Anspruch 10, wobei das erste Material so ausgewählt wird, dass es hydrophobe Eigenschaften aufweist.

12. Verfahren nach Anspruch 10 oder 11, wobei der im Schritt e) gestaltete Kanal durch den zumindest einen Dichtungsteil (81; 101) gestaltet wird, und wobei das zweite Material so ausgewählt wird, dass es hydrophobe Eigenschaften aufweist.

13. Verfahren nach einem der Ansprüche 10 bis 12, wobei der im Schritt d) gestaltete Kanal durch den Konstruktionsteil (27; 44) gestaltet wird.

14. Verfahren nach einem der Ansprüche 10 bis 13, wobei die erste Dichtungsfläche (91; 111) und die zweite Dichtungsfläche (92; 112) an einem gemeinsamen an einer Innenfläche (90) des Konstruktionsteils (82) befestigten Dichtungsteil (81; 101) vorgesehen werden.

15. Verfahren nach einem der Ansprüche 10 bis 13, wobei die erste Dichtungsfläche an einem ersten Dichtungsteil (26₁, 41) vorgesehen wird, und die zweite Dichtungsfläche an einem zweiten Dichtungsteil (26₂; 42) vorgesehen wird.

## Revendications

1. Joint d'étanchéité (20; 40; 80; 100) destiné à être utilisé dans une batterie bipolaire à électrolyte appauvri, ledit joint d'étanchéité comprenant:
- une partie de structure (27; 44; 82) sous la forme d'un cadre ayant une surface supérieure (1) et une surface inférieure (2), ladite partie de structure étant constituée d'un premier matériau, et
- au moins un canal (23, 24; 83, 84; 103, 104) pour permettre le passage du gaz à travers le joint d'étanchéité (20; 40; 80; 100), **caractérisé en ce que**:
- ledit joint d'étanchéité (20; 40; 80; 100) comprend en outre au moins une première surface d'étanchéité (30; 47; 91; 111) disposée dans une boucle fermée le long du cadre faisant saillie à partir de ladite surface supérieure (1), et au moins une deuxième surface d'étanchéité (30; 47; 92; 112) disposée dans une boucle fermée faisant saillie à partir de ladite surface inférieure (2), lesdites au moins première (30; 47; 91; 111) et deuxième (30; 47; 92; 112) surfaces d'étanchéité sont pourvues sur au moins une partie d'étanchéité (26₁, 26₂; 41, 42; 81; 101) étant constituée d'un deuxième matériau qui est déformable,
- au moins l'un des premier et deuxième matériaux possédant des propriétés hydrophobes, et
- le premier matériau de la partie de structure (27; 44; 82) présente un module d'élasticité plus élevé qu'un module d'élasticité dudit deuxième matériau de ladite au moins une partie d'étanchéité (26₁, 26₂; 41, 42; 81; 101).

2. Joint d'étanchéité selon la revendication 1, dans lequel ledit premier matériau possède des propriétés hydrophobes.

3. Joint d'étanchéité selon l'une quelconque des revendications 1 ou 2, dans lequel ladite première surface d'étanchéité (91; 111) et ladite deuxième surface d'étanchéité (92; 112) sont pourvues sur une partie d'étanchéité commune (81; 101) fixée à une surface intérieure (90) de ladite partie de structure (82), et chaque canal (83, 84; 103, 104) est pourvu à travers la partie d'étanchéité commune (81; 101) entre les première (91; 111) et la deuxième (92; 112) surfaces d'étanchéité et une surface intérieure (93; 113) de la partie d'étanchéité commune (81, 101), et dans lequel ledit deuxième matériau possède des propriétés hydrophobes.

4. Joint d'étanchéité selon la revendication 3, dans lequel chaque canal comprend au moins un trou (83; 103) entre la surface supérieure (91; 111) et la surface inférieure (92, 112) de la partie d'étanchéité commune (81; 101), ledit trou (83; 103) étant en communication avec la surface intérieure (93; 113) de ladite partie d'étanchéité commune (81).

5. Joint d'étanchéité selon la revendication 1 ou 2, dans lequel la première surface d'étanchéité est pourvue sur une première partie d'étanchéité (26₁, 41) et ladite deuxième surface d'étanchéité est pourvue sur une deuxième partie d'étanchéité (26₂; 42), et chaque canal (23, 24) est pourvu à travers la partie de structure (27; 44) entre les surfaces supérieure (1) et inférieure (2) et une surface intérieure (3) de ladite partie de structure (27; 44).

6. Batterie bipolaire à électrolyte appauvri (50; 120) comportant au moins deux cellules électrochimiques, comprenant:
- un boîtier (59; 129),
- au moins une plaque d'extrémité négative (51; 121) en contact avec au moins une électrode négative (53; 123),
- au moins une plaque d'extrémité positive (52; 122) en contact avec au moins une électrode positive (54; 124),
- au moins un ensemble d'une électrode négative (53; 123), d'une plaque bipolaire (25; 45; 85) et d'une électrode positive (54; 124) disposé dans une structure en sandwich entre l'une desdites plaques d'extrémité négative (51; 121) et positive (52; 122),
- au moins un séparateur (55; 125) disposé entre chaque électrode négative (53; 123) et positive (54; 124) formant une cellule de batterie, ledit séparateur (55; 125) comprenant un électrolyte, **caractérisé en ce que** la batterie comprend en outre un joint d'étanchéité (20; 40; 80; 100) tel que défini dans une quelconque des revendication 1 à 5 qui est disposé autour de la périphérie de chaque cellule de batterie et configuré de manière à empêcher des fuites d'électrolyte entre les cellules de batterie et de permettre au gaz de passer à travers le joint d'étanchéité.

7. Batterie selon la revendication 6, dans laquelle la batterie bipolaire ne comprend qu'une plaque d'extrémité positive (51) et qu'une seule plaque d'extrémité négative, et un joint d'étanchéité est disposé entre chaque plaque bipolaire (25; 45; 85) et/ou la plaque bipolaire (25; 45; 85) et la plaque d'extrémité positive et négative (51, 52).

8. Batterie selon la revendication 7, dans laquelle la batterie bipolaire (120) comporte une pluralité de plaques d'extrémité négatives (121) et une pluralité de plaques d'extrémité positives (122) agencées de manière à fournir une configuration d'empilement hybride prismatique bipolaire.

9. Batterie selon la revendication 8, dans laquelle la batterie bipolaire (120) est divisée en sections (I, II, III), chaque section comprenant au moins une cellule de batterie.

10. Procédé de fabrication d'un joint d'étanchéité destiné à être utilisé dans une batterie bipolaire à électrolyte appauvri, ledit procédé comprend l'étape consistant à:
a) créer une partie de structure (27; 44; 82) sous la forme d'un cadre ayant une surface supérieure (1) et une surface inférieure (2), ladite partie de structure (27; 44; 82) étant constituée d'un premier matériau,
**caractérisé en ce que** le procédé en outre comprend les étapes consistant à:
b) fixer au moins une partie d'étanchéité (26₁, 26₂; 41, 42; 81; 101) ayant au moins une première surface d'étanchéité (30; 47; 91; 111) disposée dans une boucle fermée le long du cadre faisant saillie à partir de ladite surface supérieure (1), et au moins une deuxième surface d'étanchéité (30; 47; 92; 112) disposée dans une boucle fermée faisant saillie à partir de ladite surface inférieure (2), ladite au moins une partie d'étanchéité (26₁, 26₂; 41, 42; 81; 101) étant faite d'un deuxième matériau,
c) sélectionner au moins l'un des premier et deuxième matériaux possédant des propriétés hydrophobes, et
d) sélectionner le premier matériau de la partie de structure (27; 44; 82) de manière à avoir un module d'élasticité plus élevé qu'un module d'élasticité dudit deuxième matériau de ladite au moins une partie d'étanchéité (26₁, 26₂; 41, 42; 81; 101), et
e) créer au moins un canal (23, 24; 83, 84; 103, 104) à travers ledit joint d'étanchéité (20; 40; 80; 100).

11. Procédé selon la revendication 10, dans lequel ledit premier matériau est sélectionné de manière à posséder des propriétés hydrophobes.

12. Procédé selon la revendication 10 ou 11, dans lequel le canal créé à l'étape e) est créé à travers au moins une partie d'étanchéité (81; 101), et dans lequel ledit deuxième matériau est sélectionné de manière à posséder des propriétés hydrophobes.

13. Procédé selon l'une quelconque des revendications 10 à 12, dans lequel le canal créé à l'étape d) est créé à travers la partie structurelle (27; 44).

14. Procédé selon l'une quelconque des revendications 10 à 13, dans lequel la première surface d'étanchéité (91; 111) et la deuxième surface d'étanchéité (92; 112) sont pourvues sur une partie d'étanchéité commune (81; 101) attachée à une surface intérieure (90) de ladite partie de structure (82).

15. Procédé selon l'une quelconque des revendications 10 à 13, dans lequel la première surface d'étanchéité est pourvue sur une première partie d'étanchéité (26₁; 41) et ladite deuxième surface d'étanchéité est pourvue sur une deuxième partie d'étanchéité (26₂; 42).
